# EUROPÄISCHE PATENTSCHRIFT

(11) **EP 2 049 793 B1**
(45) Veröffentlichungstag und Bekanntmachung des Hinweises auf die Patenterteilung: **14.09.2011**
(21) Anmeldenummer: 07787018.6
(22) Anmeldetag: 03.07.2007
(51) Int. Cl.: F04B 1/04, F04B 5/00

(54) **FAHRZEUGBREMSANLAGEN-KOLBENPUMPE MIT EINEM KOLBEN**
VEHICLE BRAKE SYSTEM PISTON PUMP COMPRISING A PISTON
POMPE À PISTON POUR SYSTÈMES DE FREINAGE DE VÉHICULES, MUNIE D'UN PISTON

(30) Priorität: 01.08.2006 DE 102006035708
(43) Veröffentlichungstag der Anmeldung: 22.04.2009
(73) Patentinhaber: Robert Bosch GmbH, 70442 Stuttgart (DE)
(72) Erfinder: FELLMETH, Reiner, 74354 Besigheim (DE)
(86) Internationale Anmeldenummer: PCT/EP2007/056695
(87) Internationale Veröffentlichungsnummer: WO 2008/015067

(56) Entgegenhaltungen:
- EP-A1- 0 300 274
- WO-A-99/44873
- WO-A-2006/066994
- DE-A1- 19 732 748
- DE-A1-102004 056 660

## Beschreibung

### Stand der Technik

Die Erfindung betrifft eine Fahrzeugbremsanlagen-Kolbenpump nach dem Oberbegriff von Anspruch 1 mit einem Kolben und einem Zylinder, in dem der Kolben verschiebbar ist, wobei der Kolben und der Zylinder jeweils eine einer Druckkammer zugewandte Seite aufweisen. Ferner betrifft die Erfindung eine Gruppe von Fahrzeugbremsanlagen-Kolbenpumpen nach dem Oberbegriff von Anspruch 3, und eine Fahrzeugbremsanlage nach Anspruch 4. .

Fahrzeugbremsanlagen-Kolbenpumpen der oben genannten Art werden bei Kraftfahrzeugen in den zugehörigen Bremsanlagen verwendet, um Bremsfluid zu Radbremszylindern zu fordern oder von diesen abzusaugen. Die Kolbenpumpen sind in der Regel mit zwei Zylinder-Kolben-Anordnungen versehen, an denen die Kolben mit einem Exzenterantrieb bewegt werden können. In den Zylindern ist jeweils eine Druckkammer ausgebildet, aus der der Kolben beim Bewegen Bremsfluid herausfördert.

Bei den bekannten Fahrzeugbremsanlagen-Kolbenpumpen weist die Kolbenpumpe je Zylinder-Kolben-Anordnung eine vordefinierte Kolbenquerschnittsfläche auf, so dass je Hub des Kolbens auch die Förderleistung der Kolbenpumpe fest vorgegeben ist.

Es ist eine Aufgabe der Erfindung eine Fahrzeugbremsanlage mit einer Kolbenpumpe zu schaffen, bei der mit kleinstmöglicher Teilevarianz auch verschiedene Förderleistungen des Kolbens an der Zylinder-Kolben-Anordnung darstellbar sind. Es soll erfindungsgemäß ein modulares Kolbenpumpenkonzept geschaffen werden, welches verschieden große Kolbenquerschnittsflächen ermöglicht und dennoch mit nur wenigen verschiedenen Bauteilen realisierbar ist.

Aus WO 2006/066994 A ist eine Kolbenpumpe bekannt wie sie im Oberbegriff von Anspruch 1 definiert ist, mit mindestens einem über eine Antriebseinrichtung antreibbaren und in einem Gehäuse längsbeweglich angeordneten Stufenkolbenelement. Die Kolbenpumpe ist außerdem mit zwei jeweils von dem Stufenkolbenelement und dem Gehäuse begrenzten Druckräumen ausgebildet. Zusätzlich soll ein Volumen eines mit der Förderseite verbundenen und wenigstens von dem Stufenkolbenelement und dem Gehäuse begrenzten dritten Druckraums während des Verdichtungshubs des Stufenkolbenelements um einen definierten Volumenwert vergrößert werden können und während des Saughubs des Stufenkolbenelements um den definierten Volumenwert verkleinert werden können.

Aus EP 0 300 274 A1 ist eine Axialkolbenmaschine, deren Kolben als Stufenkolben ausgebildet sind, bekannt. Die Stufenkolben sollen wenigstens zwei Zylinderräume begrenzen, wobei die Kolben antriebsseitig durch eine axial verlagerbare Antriebsfläche angetrieben werden, an der sie in einem Gleitlager mit Drucktasche gleiten, die durch einen Kanal mit einem ersten Zylinderraum verbunden ist. Dabei soll ein zweiter Zylinderraum durch einen vom ersten Kanal gesonderten zweiten Kanal mit einer zweiten Drucktasche an einer der beiden Gleitflächen des Gleitlagers verbunden sein.

Aus DE 10 2004 056660 A1 ist eine Kolbenpumpe mit einem Pumpengehäuse, in dem ein Pumpenkolben axial beweglich geführt ist, bekannt. Bei Betätigung des Pumpenkolbens soll ein Fluid von einer Saugseite der Kolbenpumpe über einen an den Pumpenkolben grenzenden Pumpenraum zu einer Druckseite der Kolbenpumpe gefördert werden. Dabei soll der Pumpenkolben mittels eines Kolbenrings geführt sein, der eine radial und axial druckunterstützt gedichtete Trennstelle aufweist.

Die Aufgabe ist erfindungsgemäß mit einer Fahrzeugbremsanlagen-Kolbenpumpe gemäß Anspruch 1 gelöst. Ferner ist die Aufgabe mit einer Gruppe von Fahrzeugbremsanlagen-Kolbenpumpen gemäß Anspruch 4 sowie mit einer Fahrzeugbremsanlage gemäß Anspruch 5 gelöst.

Erfindungsgemäß ist eine Fahrzeugbremsanlagen-Kolbenpumpe geschaffen, welche mit einem Kolben und einem Zylinder versehen ist, in dem der Kolben verschiebbar ist, und bei der der Kolben sowie der Zylinder jeweils eine einer Druckkammer zugewandte Seite aufweisen, der Kolben und der Zylinder an ihrer der Druckkammer zugewandten Seite jeweils gestuft gestaltet sind und am Kolben und am Zylinder drei Stufen ausgebildet sind. Durch den derartigen Einsatz eines am Wirkbereich gestuft ausgebildeten Kolbens sowie eines entsprechend korrespondierend ausgebildeten gestuften Zylinders ist es gemäß der Erfindung möglich, mit gleichen Bauteilen auch mehrere verschieden große Kolbenquerschnittsflächen darzustellen. Die einzelnen Kolbenpumpenvarianten werden erfindungsgemäß durch eine Abdichtung der verschiedenen Stufen von Kolben und Zylinder erzeugt.

Die der Erfindung zugrundeliegende Aufgabe ist daher auch mit einer Gruppe von Fahrzeugbremsanlagen-Kolbenpumpen mit je einem Kolben und einem Zylinder gelöst, in dem der Kolben verschiebbar ist, wobei der Kolben und der Zylinder jeweils eine einer Druckkammer zugewandte Seite aufweisen und der Kolben und der Zylinder an ihrer der Druckkammer zugewandten Seite jeweils gestuft mit je einer ersten und einer zweiten Stufe gestaltet sind, zwischen dem Kolben und dem Zylinder im Bereich der Stufen bei jeder Fahrzeugbremsanlagen-Kolbenpumpe ein Dichtelement angeordnet ist, bei einer ersten Fahrzeugbremsanlagen-Kolbenpumpe das Dichtelement an der ersten Stufe und bei einer zweiten Fahrzeugbremsanlagen-Kolbenpumpe das Dichtelement an der zweiten Stufe ausgebildet ist.

Die restlichen notwendigen Bauteile der erfindungsgemäßen Fahrzeugbremsanlagen-Kolbenpumpe, wie z.B. ein Einlassventil und ein Auslassventil, können erfindungsgemäß aus vorhandenen Konstruktionen übernommen werden und sind ferner bei den einzelnen Fahrzeugbremsanlagen-Kolbenpumpen der erfindungsgemäßen Gruppe des erfindungsgemäß modularen Kolbenpumpenkonzeptes bei jeder Variante im wesentliche identisch. Die erfindungsgemäße Fahrzeugbremsanlagen-Kolbenpumpe kann daher weitgehend mit Gleichteilen gestaltet werden. Gleichteile sind insbesondere der Zylinder, der Kolben und all die anderen Funktionsteile, welche diese Bauteile umgeben. Unterschiedliche Teile sind lediglich Dichtelement, welche an den verschiedenen Stufen des Kolbens und/oder des Zylinders angeordnet werden. Derartige Dichtelemente sind in der Regel als Hochdruckabdichtungen mit unterschiedlichem Durchmesser je nach gewünschter Kolbenquerschnittsfläche gestaltet.

Es ist daher erfindungsgemäß besonders bevorzugt, dass an den Stufen des Kolbens und/oder des Zylinders Aufnahmen zum wahlweisen Aufnehmen eines zwischen den Kolben und dem Zylinder angeordneten Dichtelement an einer der Stufen des Kolbens und/oder des Zylinders gestaltet sind. Besonders bevorzugt sind die Aufnahmen an den Stufen des Kolbens vorgesehen und es sind am Kolben und am Zylinder besonders bevorzugt ferner drei Stufen ausgebildet. Diese Gestaltungsformen haben sich hinsichtlich der besonderen Rahmenbedingungen im Dauerbetrieb von Fahrzeugbremsanlagen-Kolbenpumpen als besonders kostengünstig herstellbar und zugleich besonders langlebig erwiesen.

### Kurze Beschreibung der Zeichnungen

Nachfolgend wird ein Ausführungsbeispiel einer erfindungemäßen Fahrzeugbremsanlagen-Kolbenpumpe anhand der beigefügten schematischen Zeichnungen näher erläutert. Es zeigt:
Fig. 1 einen Längsschnitt einer Fahrzeugbremsanlagen-Kolbenpumpe gemäß dem Stand der Technik und
Fig. 2 das Detail 11 aus Fig. 1 bei einer Fahrzeugbremsanlagen-Kolbenpumpe gemäß der Erfindung.

### Bevorzugte Ausführungsform

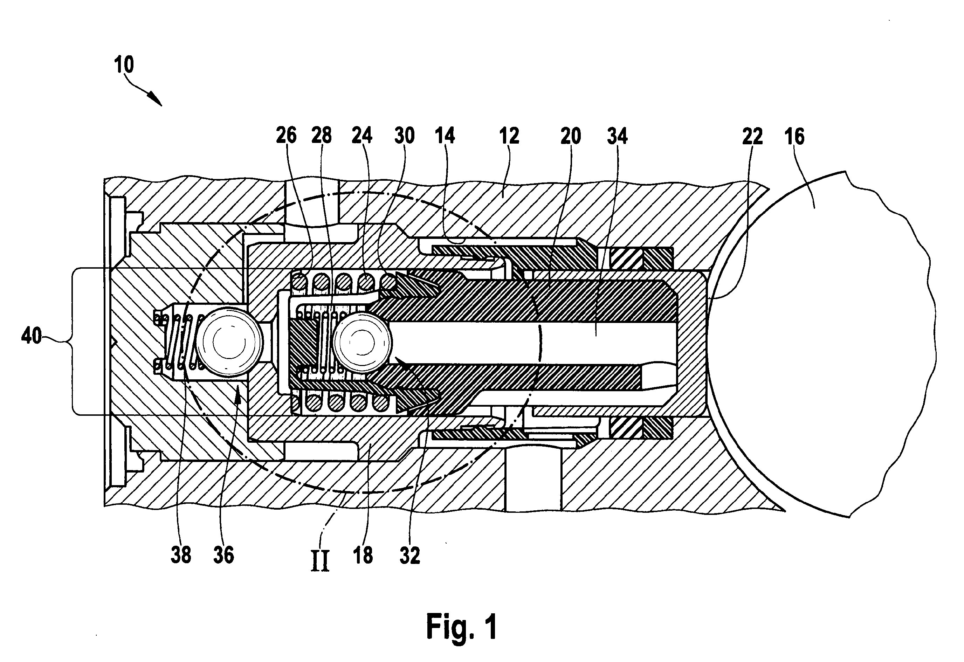

In Fig. 1 ist eine Fahrzeugbremsanlagen-Kolbenpumpe 10 veranschaulicht, welche ein Pumpengehäuse 12 mit einer darin ausgebildeten gestuften Bohrung 14 und einem Exzenter 16 umfasst. In der Bohrung 14 ist ein Zylinder 18 aufgenommen, in dem ein Kolben 20 verschiebbar gelagert ist. Eine der Stirnseiten 22 des Kolbens 20 liegt an dem Exzenter 16 an, sodass der Kolben 20 beim Drehen des Exzenters 16 im Zylinder 18 verschoben wird. Der Kolben 20 ist dabei mittels einer Schraubenfeder 24 gegen einen Boden 26 des Zylinders 18 federnd vorgespannt. Die Schraubenfeder 24 ist in einer Druckkammer 28 angeordnet, welche sich im Zylinder 18 befindet und zu der der Kolben 20 mit einer Stirnseite 30 zugewandt ist. Im Kolben 20 ist ferner ein Einlassventil 32 ausgebildet zu dem Bremsfluid durch eine Einlassleitung 34 strömen kann. Im Zylinder 18 ist ein Auslassventil 36 ausgebildet, durch das jenes Bremsfluid strömen kann, welches vom Kolben 20 aus der Druckammer 28 heraus gefördert wurde. Das geförderte Bremsfluid gelangt dabei in eine Auslassleitung 38.

Der derart ausgebildete und gelagerte Kolben 20 sowie der Zylinder 18 weisen im Bereich der Druckkammer 28 jeweils eine einzige Querschnittsfläche 40 auf, welche die Fördermenge des Kolbens 20 bei dessen Bewegung definiert.

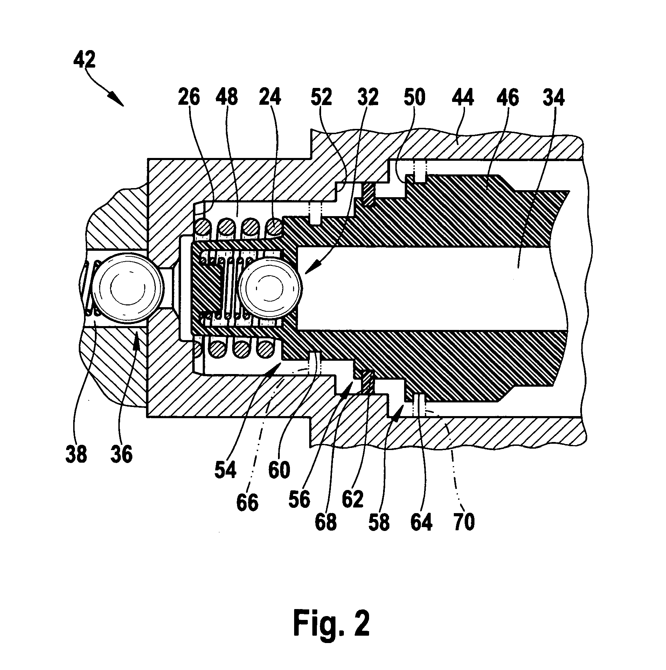

In Fig. 2 ist ein Detail einer erfindungsgemäßen Fahrzeugbremsanlagen-Kolbenpumpe 42 veranschaulicht, welche im Hinblick auf die Bauelement 12, 14, 16, 24, 32, 34, 36 und 38 wie die Fahrzeugbremsanlagen-Kolbenpumpe 10 gemäß Fig. 1 gestaltet ist.

Im Hinblick auf einen Zylinder 44 und einen darin verschiebbar gelagerten Kolben 46 ist die Fahrzeugbremsanlagen-Kolbenpumpe 42 jedoch andersartig gestaltet. Der Kolben 46 und der Zylinder 44 sind nämlich an ihrer einer Druckkammer 48 zugewandten Seite 50 bzw. 52 (welche der Stirnseite 30 bzw. dem Boden 26 beim Stand der Technik gemäß Fig. 1 entsprechen) jeweils gestuft gestaltet. Dabei sind insgesamt drei Stufen 54, 56 und 58 vorgesehen, die jeweils eine verschieden große kreisförmige Querschnittsfläche bilden. An den Stufen 54, 56 und 58 ist jeweils eine Aufnahme 60, 62 bzw. 64 zum wahlweisen Einsetzen eines von drei Dichtelementen 66, 68 bzw. 70 ausgebildet.

Auf diese Art und Weise ist eine Fahrzeugbremsanlagen-Kolbenpumpe 42 gestaltet, deren wirksame Querschnittsfläche des zugehörigen Kolbens 46 durch einfaches Einsetzen von einem von drei Dichtelement 66, 68 oder 70 variiert werden kann.

## Patentansprüche

1. Fahrzeugbremsanlagen-Kolbenpumpe (42) mit einem Kolben (46) und einem Zylinder (44), in dem der Kolben (46) verschiebbar ist, wobei der Kolben (46) und der Zylinder (44) jeweils eine einer Druckkammer (48) zugewandte Seite (50, 52) aufweisen und der Kolben (46) und der Zylinder (44) an ihrer der Druckkammer (48) zugewandten Seite (50, 52) jeweils gestuft gestaltet sind,
**dadurch gekennzeichnet, dass** am Kolben (46) und am Zylinder (44) drei Stufen (54, 56, 58) ausgebildet sind , wobei an den Stufen (54, 56, 58) des Kobens (46) und/oder des Zylinders (44) Aufnahmen (60, 62, 64) zum wahlweisen Aufnehmen eines zwischen dem Kolben (46) und dem Zylinder (44) angeordneten Dichtelements (66, 68, 70) an einer der Stufen (54, 56, 68) des Kolbens (46) und/oder des Zylinders (44) gestaltet sind.

2. Fahrzeugbremsanlagen-Kolbenpumpe nach Anspruch 1,
**dadurch gekennzeichnet, dass** die Aufnahmen (60, 62, 64) an den Stufen (54, 56, 58) des Kolbens (46) vorgesehen sind.

3. Gruppe von Fahrzeugbremsantagen-Kolbenpumpen (42) mit je einem Kolben (46) und einem Zylinder (44), in dem der Kolben (46) verschiebbar ist, wobei der Kolben (46) und der Zylinder (44) jeweils eine einer Druckkammer (48) zugewandte Seite (50, 52) aufweisen,
**dadurch gekennzeichnet, dass** der Kolben (46) und der Zylinder (44) an ihrer der Druckkammer (48) zugewandten Seite (50, 52) jeweils gestuft mit je einer ersten und einer zweiten Stufe (54, 56) gestaltet ist, zwischen dem Kolben (46) und dem Zylinder (44) im Bereich der Stufen (54, 56) bei jeder Fahrzeugbremsanlagen-Kolbenpumpe ein Dichtelement (66, 68) angeordnet ist, bei einer ersten Fahrzeugbremsanlagen-Kolbenpumpe das Dichtelement (66) an der ersten Stufe (54) und bei einer zweiten Fahrzeugbremsanlagen-Kolbenpumpe das Dichtelement (68) an der zweiten Stufe (56) ausgebildet ist.

4. Fahrzeugbremsanlage mit einer Kolbenpumpe (42) nach einem der Ansprüche 1 oder 2.

## Claims

1. Vehicle-brake-system piston pump (42) having a piston (46) and a cylinder (44), in which the piston (46) can be displaced, the piston (46) and the cylinder (44) in each case having a side (50, 52) which faces a pressure chamber (48), and the piston (46) and the cylinder (44) in each case being of stepped design on their side (50, 52) which faces the pressure chamber (48), **characterized in that** three steps (54, 56, 58) are formed on the piston (46) and on the cylinder (44), receptacles (60, 62, 64) being configured on the steps (54, 56, 58) of the piston (46) and/or of the cylinder (44) for the optional receiving of a sealing element (66, 68, 70) on one of the steps (54, 56, 58) of the piston (46) and/or of the cylinder (44), which sealing element (66, 68, 70) is arranged between the piston (46) and the cylinder (44).

2. Vehicle-brake-system piston pump according to Claim 1, **characterized in that** the receptacles (60, 62, 64) are provided on the steps (54, 56, 58) of the piston (46).

3. Group of vehicle-brake-system piston pumps (42) having in each case a piston (46) and a cylinder (44), in which the piston (46) can be displaced, the piston (46) and the cylinder (44) in each case having a side (50, 52) which faces a pressure chamber (48), **characterized in that** the piston (46) and the cylinder (44) are in each case of stepped design with in each case a first and a second step (54, 56) on their side (50, 52) which faces the pressure chamber (48), a sealing element (66, 68) is arranged between the piston (46) and the cylinder (44) in the region of the steps (54, 56) in each vehicle-brake-system piston pump, the sealing element (66) is formed on the first step (54) in a first vehicle-brake-system piston pump, and the sealing element (68) is formed on the second step (56) in a second vehicle-brake-system piston pump.

4. Vehicle brake system having a piston pump (42) according to either of Claims 1 and 2.

## Revendications

1. Pompe à piston (42) pour installation de frein de véhicule, comprenant un piston (46) et un cylindre (44) dans lequel peut coulisser le piston (46), le piston (46) et le cylindre (44) présentant à chaque fois un côté (50, 52) tourné vers une chambre de pression (48), et le piston (46) et le cylindre (44) étant configurés à chaque fois sous forme étagée sur leur côté (50, 52) tourné vers la chambre de pression (48),
**caractérisée en ce que** trois étages (54, 56, 58) sont réalisés sur le piston (46) et sur le cylindre (44), des logements (60, 62, 64) sur les étages (54, 56, 58) du piston (46) et/ou du cylindre (44) étant configurés pour recevoir de manière sélective un élément d'étanchéité (66, 68, 70) disposé entre le piston (46) et le cylindre (44) sur l'un des étages (54, 56, 58) du piston (46) et/ou du cylindre (44).

2. Pompe à piston pour installation de frein de véhicule selon la revendication 1,
**caractérisée en ce que** les logements (60, 62, 64) sont prévus sur les étages (54, 56, 58) du piston (46).

3. Groupe de pompes à piston (42) pour installation de frein de véhicule, comprenant chacune un piston (46) et un cylindre (44) dans lequel peut coulisser le piston (46), le piston (46) et le cylindre (44) présentant à chaque fois un côté (50, 52) tourné vers une chambre de pression (48), **caractérisé en ce que** le piston (46) et le cylindre (44) sont configurés sur leur côté (50, 52) tourné vers la chambre de pression (48) à chaque fois de manière étagée avec à chaque fois un premier et un deuxième étage (54, 56), un élément d'étanchéité (66, 68) étant disposé entre le piston (46) et le cylindre (44) dans la région des étages (54, 56) dans chaque pompe à piston pour installation de frein de véhicule, l'élément d'étanchéité (66) étant réalisé sur le premier étage (54) dans une première pompe à piston pour installation de frein de véhicule, et l'élément d'étanchéité (68) étant réalisé sur le deuxième étage (56) dans une deuxième pompe à piston pour installation de frein de véhicule.

4. Installation de frein de véhicule comprenant une pompe à piston (42) selon l'une quelconque des revendications 1 ou 2.
